# EUROPÄISCHE PATENTANMELDUNG

(11) **EP 4 175 123 A1**
(43) Veröffentlichungstag der Anmeldung: **03.05.2023**
(21) Anmeldenummer: 21205055.3
(22) Anmeldetag: 27.10.2021
(51) Int. Cl.: H02K 1/26, H02K 17/16

(54) **ROTOR FÜR EINE DYNAMOELEKTRISCHE ROTATORISCHE MASCHINE**

(71) Anmelder: Siemens Aktiengesellschaft, 80333 München (DE)
(72) Erfinder: Knauff, Axel, 97702 Münnerstadt (DE); Schmidt, Johannes, 97218 Gerbrunn (DE)
(74) Vertreter: Siemens Patent Attorneys

(57) **Zusammenfassung**

Die Erfindung betrifft einen Rotor (21) für eine dynamoelektrische rotatorische Maschine (23), wobei der Rotor (21) eine Mehrzahl an axial verlaufenden Öffnungen aufweist, wobei die Öffnungen (1, 11) wenigstens im Wesentlichen ringsum um einen Mittelpunkt (M) angeordnet sind, wobei wenigstens ein radiales Ende der Öffnung (1, 11) einen elliptisch geformten Abschnitt (5) aufweist.

## Beschreibung

Rotoren von Elektromotoren, insbesondere Asynchronmotoren, sind bei hohen Drehzahlen hohen mechanischen Belastungen ausgesetzt. Durch Zentrifugalkräfte entstehen in ringförmigen Abschnitten des Rotors hohe mechanische Spannungen.

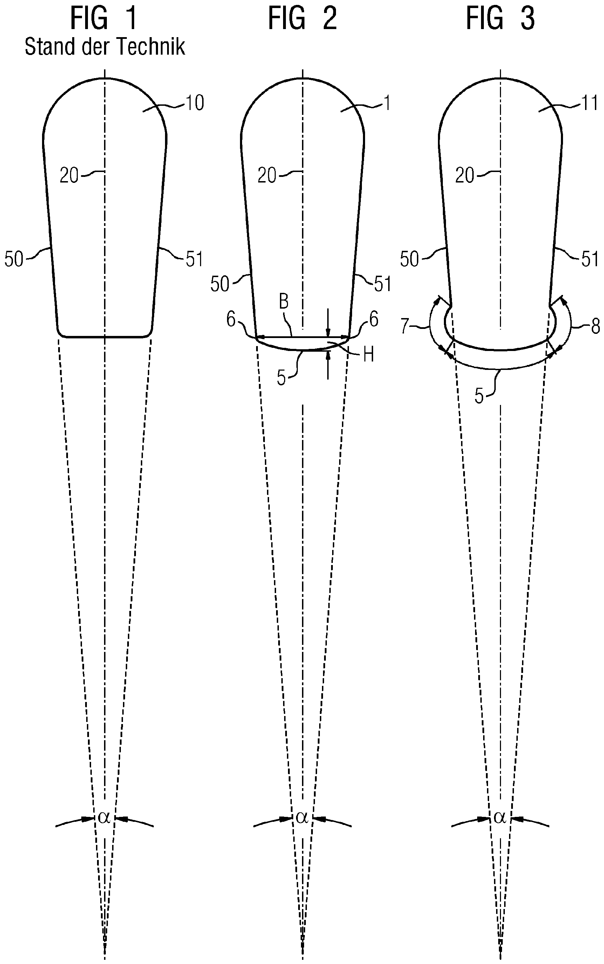

Die Ausführung mit verrundeten Ecken gemäß FIG 1 wird angewandt, um eine Querschnittsfläche eines Käfigstabs eines Kurzschlusskäfigs zu erhöhen und somit den Widerstand zu verringern.

Hierbei treten jedoch mechanische Spannungsüberhöhungen durch Kerbwirkung in den Ecken des Nutgrundes auf.

Jedoch treten auch hierbei mechanische Spannungsüberhöhungen in den Ecken auf, welche zu Dauerfestigkeitsproblemen führen können.

Der Erfindung liegt die Aufgabe zugrunde, dies zu verbessern.

Die Lösung der Aufgabe gelingt durch Anspruch 1, d. h. einen Rotor für eine dynamoelektrische rotatorische Maschine, wobei der Rotor eine Mehrzahl an axial verlaufenden Öffnungen aufweist, wobei die Öffnungen wenigstens im Wesentlichen ringsum um einen Mittelpunkt angeordnet sind, wobei wenigstens ein radiales Ende der Öffnung einen elliptisch geformten Abschnitt aufweist.

Dies ist von Vorteil, da sich eine deutlich gleichmäßigere und in Spitzen deutlich niedrigere mechanische Spannungsbelastung ergibt.

So sind höhere Drehzahlen mechanisch möglich und eine Dauerfestigkeit ist gegeben.

Vorteilhaft ist eine Ausführungsform, wonach der elliptisch geformte Abschnitt ein Ellipsenverhältnis von Höhe zu Breite aufweist, welches zwischen 0,2:1 und 0,6:1 liegt.

So kann eine gute Verteilung von Spannungen über die Öffnung hinweg erreicht werden.

Vorteilhaft ist eine Ausführungsform, wonach die Öffnung wenigstens einen kreisförmigen Abschnitt aufweist, wobei der kreisförmige Abschnitt zum elliptischen Abschnitt benachbart ausgebildet ist.

Diese Ausführungsform lässt sich besonders gut fertigen, da beim Fräsen der Öffnung der kreisförmige Abschnitt durch das Fräswerkzeug selbst ausgebildet wird.

Vorteilhaft ist ein Übergang des kreisförmigen Abschnitts zum elliptischen Abschnitt dort, wo ein Krümmungsradius des kreisförmigen Abschnitts gleich oder zumindest fast gleich (beispielsweise Abweichung von 10%) ist wie ein Krümmungsradius des elliptischen Abschnitts.

Vorteilhaft ist eine Ausführungsform, wonach der Rotor einen Kurzschlussring aufweist, wobei die Öffnungen im Kurzschlussring ausgebildet sind, wobei der elliptisch geformte Abschnitt an einem in Richtung des Mittelpunkts weisenden radialen Ende ausgebildet ist.

Der elliptische Abschnitt weist vorteilhaft in Richtung des Mittelpunkts.

Vorteilhaft ist eine Ausführungsform, wonach der Kurzschlussring eine Mehrzahl an miteinander stoffschlüssig verbundenen, insbesondere miteinander verschweißten, Kurzschlussringscheiben aufweist.

Dies bietet hinsichtlich einer Fertigung Vorteile.

Wird der Kurzschlussring z. B. in Scheiben nacheinander stoffschlüssig mit einem Käfigstab verbunden, wird eine hohe Stabilität und eine gute Verbindung erreicht.

Die Kurzschlussringscheiben können kostengünstig, z. B. durch Stanzen, hergestellt werden.

Die Kurzschlussringscheiben können auch aus höherfestem Material hergestellt werden, um dadurch den Betrieb bei höheren Drehzahlen zu gewährleisten.

Vorteilhaft ist eine Ausführungsform des Rotors, aufweisend ein Rotorpaket, wobei die Öffnungen im Rotorpaket ausgebildet sind.

Die Öffnungen können als Nuten im Rotorpaket ausgebildet sein.

In die Nuten können vorgefertigte Käfigstäbe eingefügt werden. Die Käfigstäbe ragen vorteilhaft über das Rotorpaket hinaus.

Die Käfigstäbe können mit dem Kurzschlussring zur Bildung eines Kurzschlusskäfigs verbunden werden.

Vorteilhaft ist eine Ausführungsform, wonach das Rotorpaket eine Mehrzahl an Rotorblechen aufweist.

Zur Bildung des mit Nuten versehenen Rotorpakets weist vorzugsweise ein Blechschnitt die beschriebenen Öffnungen auf.

Die Öffnungen können in einem Kurzschlussring, in einer Kurzschlussringscheibe oder auch in einem Rotorblech eines Rotorpakets ausgebildet sein.

Wenn Öffnungen des Kurzschlussrings den Öffnungen des Rotorpakets gleichen, können gleichförmige Käfigstäbe eingesetzt werden.

Jedoch ist es auch möglich, Öffnungen mit elliptischem Abschnitt in einem Kurzschlussring auszubilden und eine andersartige Öffnung im Rotorpaket, vorzugsweise mittels der Rotorbleche, auszubilden.

Die Lösung der Aufgabe gelingt zudem durch einen Kurzschlussring für einen Rotor, aufweisend eine Mehrzahl an axial verlaufenden Öffnungen, wobei die Öffnungen wenigstens im Wesentlichen ringsum um einen Mittelpunkt angeordnet sind, wobei wenigstens ein in Richtung des Mittelpunkts weisendes radiales Ende der Öffnung einen elliptisch geformten Abschnitt aufweist.

Vorteilhaft ist eine Ausführungsform, wonach die Öffnung wenigstens einen kreisförmigen Abschnitt aufweist, wobei der kreisförmige Abschnitt zum elliptischen Abschnitt benachbart ausgebildet ist.

Vorteilhaft weist der Kurzschlussring eine Mehrzahl an Kurzschlussringscheiben auf.

Vorteilhaft ist der Kurzschlussring mittels der Öffnungen mit aus einem Rotorpaket der dynamoelektrischen rotatorischen Maschine herausragenden Käfigstäben verbindbar.

So kann ein Kurzschlusskäfig für eine Käfigläufer-Asynchronmaschine gebildet werden.

Die Lösung der Aufgabe gelingt zudem durch eine Kurzschlussringscheibe für einen Kurzschlussring.

Die Lösung der Aufgabe gelingt zudem durch ein Rotorpaket für einen Rotor, aufweisend eine Mehrzahl an axial verlaufenden Öffnungen, wobei die Öffnungen wenigstens im Wesentlichen ringsum um einen Mittelpunkt angeordnet sind, wobei wenigstens ein in Richtung des Mittelpunkts weisendes radiales Ende der Öffnung einen elliptisch geformten Abschnitt aufweist.

Vorteilhaft ist eine Ausführungsform, wonach die Öffnung wenigstens einen kreisförmigen Abschnitt aufweist, wobei der kreisförmige Abschnitt zum elliptischen Abschnitt benachbart ausgebildet ist.

Das Rotorpaket weist vorteilhaft eine Mehrzahl an Rotorblechen auf.

Die Lösung der Aufgabe gelingt zudem durch ein Rotorblech für ein Rotorpaket.

Die Öffnungen sind vorteilhaft im Blechschnitt realisiert.

Die Lösung der Aufgabe gelingt zudem durch eine dynamoelektrische rotatorische Maschine, aufweisend einen Rotor.

Die Maschine ist beispielsweise eine Asynchronmaschine.

Die Lösung der Aufgabe gelingt zudem durch ein Verfahren zur Herstellung eines Rotors mit folgenden Schritten:
- Bereitstellen des Rotorpakets,
- Einfügen von Käfigstäben in die axial verlaufenden Öffnungen des Rotorpakets,
- Anbringen wenigstens einer Kurzschlussringscheibe auf aus dem Rotorpaket herausragende Käfigstäbe,
- Stoffschlüssiges Verbinden, insbesondere mittels Schwei-ßens, der Kurzschlussringscheibe mit den Käfigstäben oder
- Anbringen wenigstens einer weiteren Kurzschlussringscheibe und stoffschlüssiges Verbinden, insbesondere mittels Schwei-ßens, der Kurzschlussringscheiben miteinander und mit den Käfigstäben.

Die Käfigstäbe sind vorzugsweise vorgefertigt.

Die Käfigstäbe weisen z. B. Aluminium und/oder Kupfer auf.

So kann eine elektrische Leitfähigkeit erreicht werden.

Die Kurzschlussringscheiben weisen z. B. Aluminium und/oder Kupfer auf.

Die Käfigstäbe werden vorzugsweise in die axial verlaufenden Öffnungen bzw. Nuten des Rotorpakets gedrückt bzw. gepresst.

Vorzugsweise anschließend wird dann eine Kurzschlussringscheibe oder eine Mehrzahl an Kurzschlussringscheiben auf die aus dem Rotorpaket herausragenden Käfigstäbe aufgesetzt.

Eine vorteilhafte Verschweißung führt zu einer stoffschlüssigen und stabilen Verbindung.

Vorteilhaft wird ein Wärmeeintrag in das Material so gesteuert, dass mindestens ein Viertel (radial betrachtet), vorzugsweise eine Hälfte, des Käfigstabs mit dem umgebenden Material der Kurzschlussringscheibe stoffschlüssig verbunden ist. Für die stoffschlüssige Verbindung der Kurzschlussringscheiben gilt dies vorteilhaft analog.

Im Folgenden wird die Erfindung anhand der in den Figuren dargestellten Ausführungsbeispiele näher beschrieben und erläutert. Es zeigen:
- FIG 1: eine aus dem Stand der Technik bekannte Öffnung,
- FIG 2: eine Ausgestaltung einer Öffnung,
- FIG 3: eine weitere Ausgestaltung einer Öffnung,
- FIG 4: einen Rotor,
- FIG 5: einen Rotor,
- FIG 6: die in FIG 3 beschriebene Öffnung,
- FIG 7: den Rotor in Frontalansicht,
- FIG 8 und FIG 9: FEM-Bilder,
- FIG 10: eine dynamoelektrische rotatorische Maschine,
- FIG 11: ein Verfahren zur Herstellung des Rotors.

FIG 1 zeigt eine aus dem Stand der Technik bekannte Öffnung 10. Zudem ist eine Mittelachse 20 gezeigt.

Die Öffnung 10 ist als Öffnung eines Kurzschlussrings bekannt.

Die Öffnung 10 weist in der Figur verrundete Ecken auf.

FIG 2 zeigt eine Ausgestaltung einer Öffnung 1.

Ein Ende der Öffnung 1 weist einen elliptisch geformten Abschnitt 5 auf.

Der elliptische Abschnitt 5 entspricht in der Figur einem unterhalb einer Ellipsenhauptachse gelegenen Ellipsenteil. Ein oberhalb der Ellipsenhauptachse gelegener Ellipsenteil ist in der Figur ebenfalls angedeutet.

Eine Breite B des elliptischen Abschnitts 5 wird durch die Ellipsenhauptachse definiert. Eine in der Figur gezeigte Höhe H wird durch die Ellipsennebenachse definiert.

Vorteilhaft weist der elliptisch geformte Abschnitt ein Ellipsenverhältnis von Höhe zu Breite auf. Diese liegt vorteilhaft zwischen 0,2:1 und 0,6:1.

Die Breite B der Ellipse beträgt beispielsweise wenigstens 0,5 mm und höchstens 8 mm.

Besonders vorteilhaft beträgt die Breite B wenigstens 1 mm und höchstens 6 mm.

Eine Ausführung kann eine Breite von 4,6 mm sein. Besonders eine Ausführung zwischen 3 mm und 5 mm kann gut eingesetzt werden.

Die Figur zeigt zudem die Schenkel 50 und 51 der Öffnung, welche in der Figur an den elliptischen Abschnitt 5 angrenzen. Die Schenkel 50 und 51 können parallel zueinander angeordnet sein. Vorteilhaft ist jedoch die in der Figur dargestellte Anordnung, wonach gedachte Verlängerungen der beiden Schenkel 50, 51 einen Winkel α einschließen.

Der Winkel α kann bei AH90 (AH: Achshöhe) und AH140 z. B. zwischen 3° und 4° liegen.

Allerdings ist hierbei vorteilhaft zu beachten, dass ein Mittelpunkt des Winkels nicht mit der Rotationsachse des Rotors übereinstimmt, da die Zahnbreite üblicherweise konstant gewählt wird.

Weiterhin ist vorteilhaft der Winkel α von der Anzahl der Rotornuten Nr abhängig.

Je nach Ausführung der Zahnbreite kann Folgendes vorteilhaft sein: α ∼ 360° / Nr * [0,4...0,6]

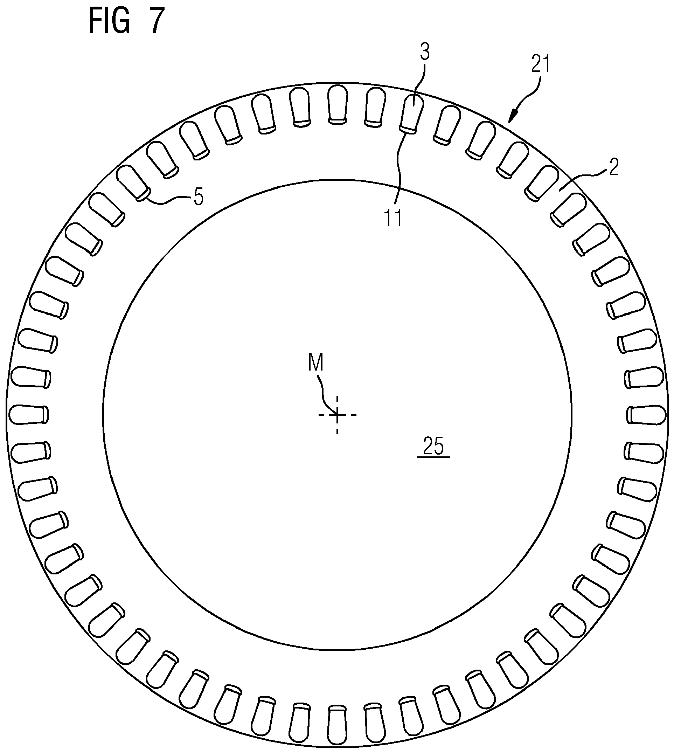

Besonders vorteilhaft ist eine Ausführung, wonach ein Schenkel 50 (kann auch als Flanke bezeichnet werden) einer Öffnung parallel zum Schenkel 51 einer benachbarten Öffnung (vgl. z. B. FIG 7) ausgebildet ist.

FIG 3 zeigt eine Ausgestaltung einer Öffnung 11.

Die Öffnung 11 weist in der Figur zwei kreisförmige Abschnitte 7 und 8 auf. Die kreisförmigen Abschnitt 7, 8 sind zum elliptischen Abschnitt 5 benachbart ausgebildet.

Der kreisförmige Abschnitt 7 bzw. 8 kann z. B. die Form eines Kreissegments aufweisen.

Ein Radius des Kreissegments ist beispielsweise wenigstens 0,5 mm und höchstens 3 mm. Besonders vorteilhaft ist ein Radius des Kreissegments von 1,5 mm.

Der kreisförmige Abschnitt 7 bzw. 8 ist aus fertigungstechnischer Sicht von Vorteil.

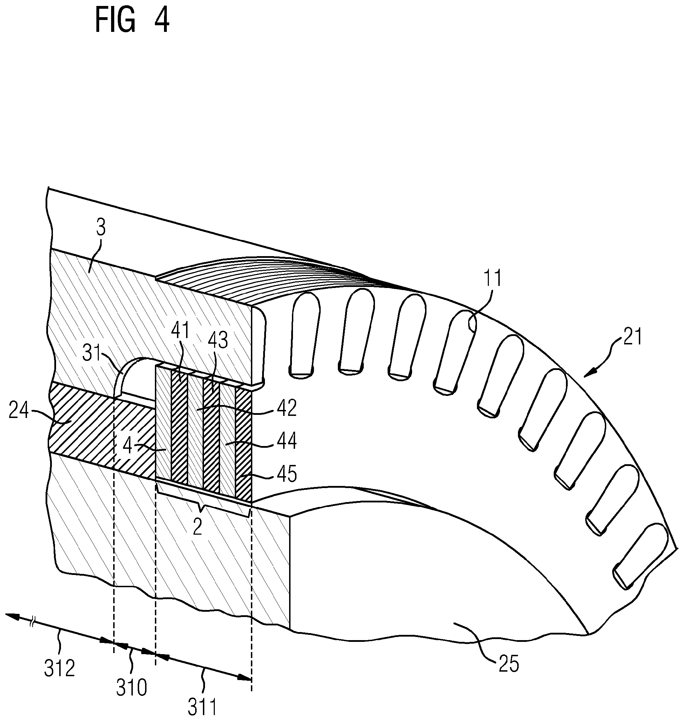

Die Öffnung 11 kann beispielsweise in einen Ring zur Bildung eines Kurzschlussrings 2 bzw. einer Kurzschlussringscheibe 4...46 (siehe FIG 4) gefräst werden. Ein Radius des kreisförmigen Abschnitts 7 bzw. 8 entspricht dann vorteilhaft einem Radius eines Fräswerkzeugs.

Um eine spannungsmäßig vorteilhafte Geometrie zu erhalten, ist es besonders vorteilhaft, wenn ein Übergang vom elliptischen Abschnitt 5 zum kreisförmigen Abschnitt 7 bzw. 8 dort ausgebildet ist, wo der elliptische Abschnitt 5 und der kreisförmigen Abschnitt 7 bzw. 8 einen gleichen oder zumindest ähnlichen Krümmungsradius haben.

Zur Reduzierung der Spannung ist eine Stetigkeit der Krümmung vorteilhaft zu beachten.

Wie bereits erläutert ist ein Ellipsenverhältnis zwischen 0,2:1 und 0,6:1 von Vorteil, beispielsweise auch 0,3:1.

Die gezeigten Öffnungen 1 und 11 können in einem Kurzschlussring 2, in einer Kurzschlussringscheibe 4...46 oder auch in einem Rotorblech eines Rotorpakets 24 ausgebildet sein.

Wenn Öffnungen des Kurzschlussrings 2 den Öffnungen des Rotorpakets 24 gleichen, können gleichförmige Käfigstäbe eingesetzt werden.

Jedoch ist es auch möglich, die in FIG 2 bzw. 3 gezeigten Öffnungen in einem Kurzschlussring auszubilden und eine andersartige Öffnung, beispielsweise wie in FIG 1 gezeigt, im Rotorpaket, vorzugsweise mittels der Rotorbleche, auszubilden. Dann kann der Käfigstab 3 mit der in FIG 4 gezeigten Ausklinkung 31 versehen werden.

FIG 4 zeigt einen Rotor 21 in einer Ansicht, in welcher ein Schnitt durch einen Käfigstab 3 und auch durch die Öffnung 11 erfolgte.

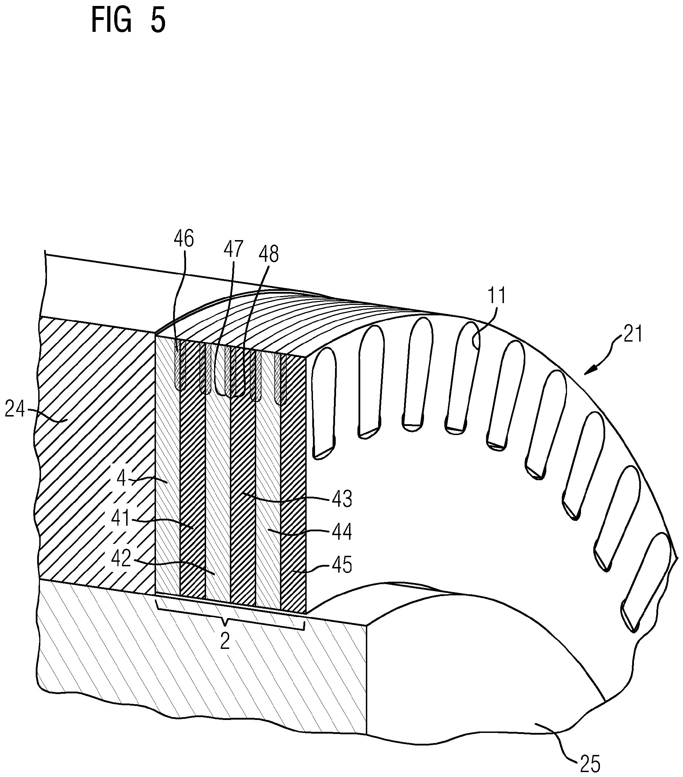

FIG 5 zeigt den Rotor 21 in einer Ansicht, in welcher ein Schnitt durch einen Zahn (ohne Bezugszeichen) erfolgte.

FIG 4 und FIG 5 zeigen einen Kurzschlussring 2, der in den Figuren - rein beispielhaft - aus sechs Kurzschlussringscheiben 4, 41, 42, 43, 44, 45 gebildet ist.

Die Figuren zeigen Käfigstäbe 3, die aus einem Rotorpaket 24 herausragen.

Durch stoffschlüssiges Verbinden, insbesondere mittels Schweißens, der Kurzschlussringscheiben 4...45 mit den Käfigstäben 3 bzw. durch stoffschlüssiges Verbinden, insbesondere mittels Schweißens, mehrerer Kurzschlussringscheiben 4...45 miteinander und mit den Käfigstäben 3 gelingt eine stabile Verbindung, die hohen Drehzahlen standhalten kann.

Eine Schweißnaht 46 ist in FIG 5 gezeigt.

Die Kurzschlussringscheiben 4...45 können Formabweichungen 47, 48 zur Bildung einer Mulde aufweisen. So kann bspw. Schweißmaterial gut eingebracht werden.

Der Kurzschlussring 2 liegt vorteilhaft nicht auf einer Welle 25 auf. Es ist jedoch denkbar.

Vorteilhaft ist hierbei Laser-Schweißen und/oder Elektronenstrahl-Schweißen. Auch andere Verbindungsarten sind denkbar.

In FIG 4 ist eine Ausgestaltung gezeigt, in welcher sich die Öffnungen des Kurzschlussrings 2 von denen des Rotorpakets 24 unterscheiden. Der Käfigstab 3 ist hierbei mit einer Ausklinkung versehen.

Die Ausklinkung weist in der Figur eine Ausklinkungsfläche 31 auf. Die Ausklinkung ist vorteilhaft bogenförmig, um eine gute Kraftverteilung zu gewährleisten.

Die Ausklinkung kann auch die Form eines Kreissegments aufweisen. Auch andere Formen, beispielsweise eine elliptische Form, sind möglich.

Die Figur zeigt zudem einen Käfigstab 3 mit einem ausgeklinkten Bereich 311, einem Übergangsbereich 310 sowie einen weiteren Bereich 312, welcher vorteilhaft innerhalb des Blechpakets 24 liegt.

Ein ausgeklinkter Bereich 311 (kann auch Bereich mit einer Ausklinkung genannt werden) liegt in der Figur in einer Öffnung des Kurzschlussrings 2, wobei der Kurzschlussring 2 auch in dieser Figur durch eine Mehrzahl an Kurzschlussringscheiben 4,...,45 gebildet wird.

Der Kurzschlusskäfig, also eine Mehrzahl an elektrisch leitfähigen Käfigstäben 3 und wenigstens ein elektrisch leitfähigen Kurzschlussring 2, vorzugsweise zwei elektrisch leitfähige Kurzschlussringe 2, sind vorteilhaft Teil einer Asynchronmaschine.

Vorteilhaft weisen alle Käfigstäbe 3 einen ausgeklinkten Bereich 311 auf.

Der in FIG 4 gezeigte Übergangsbereich 310 weist vorteilhaft eine Rundung auf, so kann eine Spannungsbelastung des Käfigstabs 3 in diesem Bereich gering gehalten werden.

Vorteilhaft ist ein bogenförmiger Übergang oder ein kreissegmentförmiger Übergang.

Die Figur zeigt auch, dass das Ende des ausgeklinkten Bereichs 311 in einer Ebene mit einem Ende des Kurzschlussrings 2 liegt.

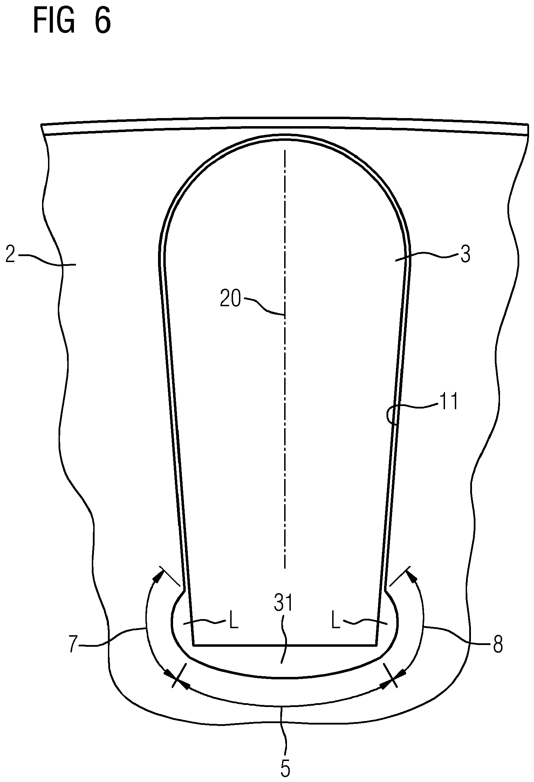

FIG 6 zeigt die in FIG 3 beschriebene Öffnung 11, ausgebildet in einem Kurzschlussring 2.

Der Käfigstab 3 füllt die Öffnung 11 nicht vollständig. Es sind Hohlräume erkennbar. Diese sind beispielsweise mit Luft L gefüllt.

Die Figur zeigt zudem, die in FIG 4 beschriebene Variante des Käfigstabs 3 mit Ausklinkungsfläche 31.

FIG 7 zeigt den Rotor 21 in Frontalansicht. Der Rotor 21 weist eine Mehrzahl an Öffnungen 11 auf. Die Figur zeigt zudem den Kurzschlussring 2 sowie die Welle 25.

Die Öffnungen 11 verlaufen axial, eine Rotationsachse des Rotors 21 betreffend, wie bereits in FIG 4 dargestellt.

Die Öffnungen 11 sind in der Figur ringsum um einen Mittelpunkt M angeordnet, wobei wenigstens ein radiales Ende der Öffnung 11 einen elliptisch geformten Abschnitt 5 aufweist.

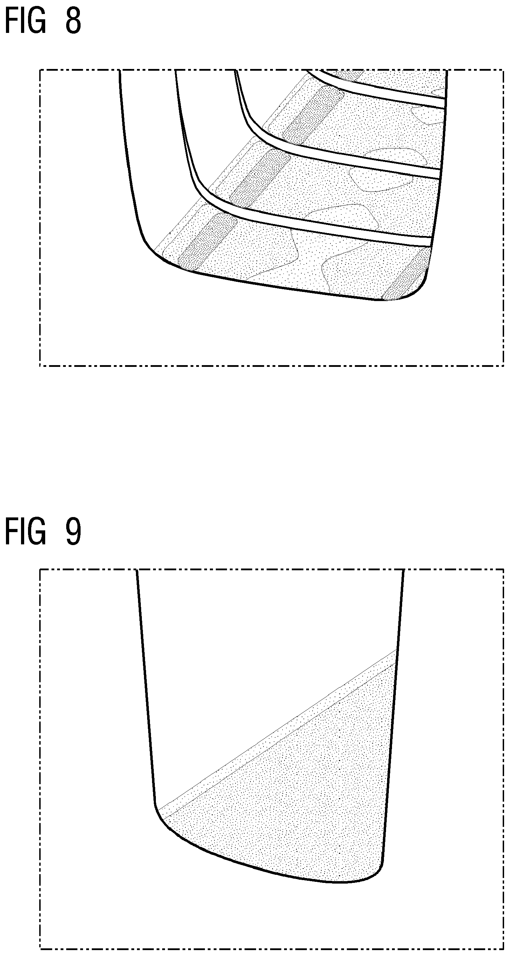

FIG 8 zeigt ein FEM-Bild (Finite-Elemente-Methode) der in FIG 1 dargestellten Öffnung 10, die in einem Kurzschlussring ausgebildet ist.

Die Ecken der Öffnung 10 sind ausgerundet bzw. verrundet, beispielsweise mit einer Verrundung von 0,5 mm.

FIG 8 zeigt hierzu exemplarisch ermittelte Spannungen. Deutlich erkennbar sind Spannungsüberhöhungen in den Ecken des Öffnungsgrundes.

FIG 9 zeigt ein FEM-Bild der in FIG 2 dargestellten Öffnung 11, die in einem Kurzschlussring ausgebildet ist.

Durch den elliptischen Abschnitt ergibt sich eine deutlich gleichmäßigere und in den Spitzen deutlich niedrigere Spannungsbelastung.

Hierdurch sind höhere Drehzahlen der Maschinen bzw. Motoren mechanisch möglich und/oder die Dauerfestigkeit wird vorteilhaft beeinflusst.

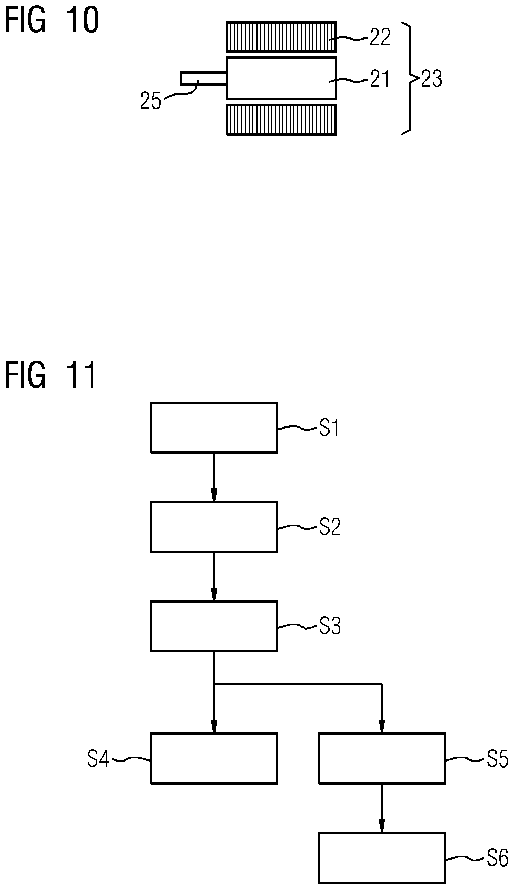

FIG 10 zeigt die dynamoelektrische rotatorische Maschine 23, aufweisend einen Rotor 21 mit einer Welle 25 und einem Rotorpaket 24, insbesondere Blechpaket, sowie einen Stator 22.

FIG 11 zeigt ein Verfahren zur Herstellung des Rotors 21.

In einem Verfahrensschritt S1 erfolgt ein Bereitstellen des Rotorpakets.

In einem Verfahrensschritt S2 erfolgt ein Einfügen von Käfigstäben in die axial verlaufenden Öffnungen des Rotorpakets.

In einem Verfahrensschritt S3 erfolgt ein Anbringen wenigstens einer Kurzschlussringscheibe auf aus dem Rotorpaket herausragende Käfigstäbe.

In einem Verfahrensschritt S4 erfolgt ein stoffschlüssiges Verbinden, insbesondere mittels Schweißens, der Kurzschlussringscheibe mit den Käfigstäben.

Alternativ kann in einem Verfahrensschritt S5 ein Anbringen wenigstens einer weiteren Kurzschlussringscheibe erfolgen.

Ein stoffschlüssiges Verbinden, insbesondere mittels Schwei-ßens, der Kurzschlussringscheiben miteinander und mit den Käfigstäben gelingt in einem Verfahrensschritt S6.

## Patentansprüche

1. Rotor (21) für eine dynamoelektrische rotatorische Maschine (23), wobei der Rotor (21) eine Mehrzahl an axial verlaufenden Öffnungen aufweist, wobei die Öffnungen (1, 11) wenigstens im Wesentlichen ringsum um einen Mittelpunkt (M) angeordnet sind, wobei wenigstens ein radiales Ende der Öffnung (1, 11) einen elliptisch geformten Abschnitt (5) aufweist.

2. Rotor (21) nach Anspruch 1, wobei der elliptisch geformte Abschnitt (5) ein Ellipsenverhältnis von Höhe (H) zu Breite (B) aufweist, welches zwischen 0,2:1 und 0,6:1 liegt.

3. Rotor (21) nach einem der vorhergehenden Ansprüche, wobei die Öffnung (1, 11) wenigstens einen kreisförmigen Abschnitt (7, 8) aufweist, wobei der kreisförmige Abschnitt (7, 8) zum elliptischen Abschnitt (5) benachbart ausgebildet ist.

4. Rotor (21) nach einem der vorhergehenden Ansprüche, wobei der Rotor (21) einen Kurzschlussring (2) aufweist, wobei die Öffnungen (1, 11) im Kurzschlussring (2) ausgebildet sind, wobei der elliptisch geformte Abschnitt (5) an einem in Richtung des Mittelpunkts (5) weisenden radialen Ende ausgebildet ist.

5. Rotor (21) nach Anspruch 4, wobei der Kurzschlussring (2) eine Mehrzahl an miteinander stoffschlüssig verbundenen, insbesondere miteinander verschweißten, Kurzschlussringscheiben (4, 41, 42, 43, 44, 45) aufweist.

6. Rotor (21) nach einem der vorhergehenden Ansprüche, aufweisend ein Rotorpaket (24), wobei die Öffnungen (1, 11) im Rotorpaket (24) ausgebildet sind.

7. Rotor (21) nach Anspruch 6, wobei das Rotorpaket (24) eine Mehrzahl an Rotorblechen aufweist.

8. Kurzschlussring (2) für einen Rotor (21) nach einem der Ansprüche 1 bis 7, aufweisend eine Mehrzahl an axial verlaufenden Öffnungen (1, 11), wobei die Öffnungen (1, 11) wenigstens im Wesentlichen ringsum um einen Mittelpunkt angeordnet sind, wobei wenigstens ein in Richtung des Mittelpunkts (M) weisendes radiales Ende der Öffnung (1, 11) einen elliptisch geformten Abschnitt (5) aufweist.

9. Kurzschlussring (2) nach Anspruch 8, aufweisend eine Mehrzahl an Kurzschlussringscheiben (4, 41, 42, 43, 44, 45).

10. Kurzschlussring (2) nach einem der Ansprüche 8 oder 9, wobei der Kurzschlussring (2) mittels der Öffnungen (1, 11) mit aus einem Rotorpaket (24) der dynamoelektrischen rotatorischen Maschine (23) herausragenden Käfigstäben verbindbar ist.

11. Kurzschlussringscheibe (4, 41, 42, 43, 44, 45) für einen Kurzschlussring (2) nach einem der Ansprüche 8 bis 10.

12. Rotorpaket (24) für einen Rotor (21) nach einem der Ansprüche 1 bis 7, aufweisend eine Mehrzahl an axial verlaufenden Öffnungen (1,11), wobei die Öffnungen wenigstens im Wesentlichen ringsum um einen Mittelpunkt (M) angeordnet sind, wobei wenigstens ein in Richtung des Mittelpunkts (M) weisendes radiales Ende der Öffnung (1, 11) einen elliptisch geformten Abschnitt (5) aufweist.

13. Rotorpaket (24) nach Anspruch 12, aufweisend eine Mehrzahl an Rotorblechen.

14. Rotorblech für ein Rotorpaket (24) nach einem der Ansprüche 12 oder 13.

15. Dynamoelektrische rotatorische Maschine (23), aufweisend einen Rotor (21) nach einem der Ansprüche 1 bis 7.

16. Verfahren zur Herstellung eines Rotors (21) nach einem der Ansprüche 1 bis 7, mit folgenden Schritten:
- Bereitstellen des Rotorpakets (24),
- Einfügen von Käfigstäben (3) in die axial verlaufenden Öffnungen (1, 11) des Rotorpakets (24),
- Anbringen wenigstens einer Kurzschlussringscheibe (4, 41, 42, 43, 44, 45) auf aus dem Rotorpaket (24) herausragende Käfigstäbe (3),
- Stoffschlüssiges Verbinden, insbesondere mittels Schwei-ßens, der Kurzschlussringscheibe (4, 41, 42, 43, 44, 45) mit den Käfigstäben (3)
oder
- Anbringen wenigstens einer weiteren Kurzschlussringscheibe (4, 41, 42, 43, 44, 45) und stoffschlüssiges Verbinden, insbesondere mittels Schweißens, der Kurzschlussringscheiben (4, 41, 42, 43, 44, 45) miteinander und mit den Käfigstäben (3).
